(19) Europäisches Patentamt
European Patent Office
Office européen des brevets

(11) Veröffentlichungsnummer: **0 402 748 B1**

# (12) EUROPÄISCHE PATENTSCHRIFT

(45) Veröffentlichungstag der Patentschrift: **24.08.94**

(51) Int. Cl.[5]: **C08L 27/06**, C08F 2/24

(21) Anmeldenummer: **90110669.0**

(22) Anmeldetag: **06.06.90**

## (54) Vinylchloridpolymerisat enthaltende Formmassen mit verringertem Fogging.

(30) Priorität: **15.06.89 DE 3919548**

(43) Veröffentlichungstag der Anmeldung:
**19.12.90 Patentblatt 90/51**

(45) Bekanntmachung des Hinweises auf die Patenterteilung:
**24.08.94 Patentblatt 94/34**

(84) Benannte Vertragsstaaten:
**DE ES FR GB IT**

(56) Entgegenhaltungen:
**EP-A- 0 255 594**
**DD-A- 150 213**
**DD-A- 159 718**
**DE-A- 3 640 337**

(73) Patentinhaber: **BAYER AG**

**D-51368 Leverkusen (DE)**

(72) Erfinder: **Lindner, Christian, Dr.**
**Im Wasserblech 11**
**D-5000 Köln 91 (DE)**
Erfinder: **Schmidt, Adolf, Dr.**
**Roggendorfstrasse 67**
**D-5000 Köln 80 (DE)**
Erfinder: **Eichenauer, Herbert, Dr.**
**Gustav-Heinemann-Strasse 3**
**D-4047 Dormagen 1 (DE)**
Erfinder: **Piejko, Karl-Erwin, Dr.**
**Unterscheiderweg 7 a**
**D-5060 Bergisch Gladbach 2 (DE)**
Erfinder: **Ott, Karl-Heinz, Dr.**
**Paul-Klee-Strasse 54**
**D-5090 Leverkusen 1 (DE)**

EP 0 402 748 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen aus einem Vinylchloridpolymerisat und einem oder mehreren mit speziellen Emulgatoren hergestellten Emulsionspolymerisaten, sowie ihre Verwendung zur Herstellung von Formkörpern, Folien und Filmen mit verbesserten, anwendungstechnischen Eigenschaften, wie verringertem Fogging.

Aus Vinylchloridpolymerisaten und Mischungen von Vinylchloridpolymerisaten mit Kautschuken und/oder harzartigen Vinylpolymerisaten werden die verschiedensten Gebrauchsgüter hergestellt.

Die den Vinylchloridpolymerisaten zugegebenen anderen Polymeren werden häufig durch Emulsionspolymerisation hergestellt. Dabei verbleibt ein Teil der zur Emulsionspolymerisation erforderlichen Emulgatoren in den Polymeren und beeinflußt dadurch die anwendungstechnischen Eigenschaften der Polymeren-Mischungen. Insbesondere wird das Fließverhalten und die Farbe solcher Blends von den noch in den Polymeren enthaltenen Emulgatoren beeinflußt. Durch die vorhandenen flüchtigen Bestandteile in den Blends wird auch das Fogging dieser Blends verschlechtert.

Gegenstand der Erfindung sind thermoplastische Formmassen aus

A) 10 bis 95 Gew.-% eines Vinylchloridpolymerisats und

B) 90 bis 5 Gew.-% eines oder mehrerer thermoplastischer Polymerer, die

- B1) Kautschukpolymerisate,
- B2) Pfropfpolymerisate und
- B3) Vinylpolymerisate,

darstellen,

wobei B1), B2) und B3) durch Emulsionspolymerisation in Gegenwart von Emulgatoren hergestellt wurden, die bei der Umsetzung von 1 Mol eines Diols der Formel (I)

HO - M - OH (I),

worin

M für

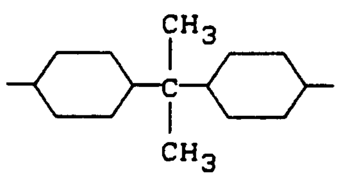 , 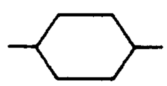 ,

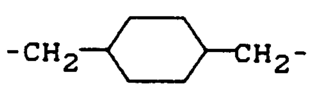 , 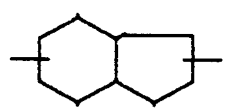 ,

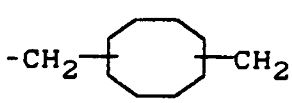 , 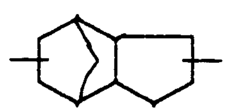 ,

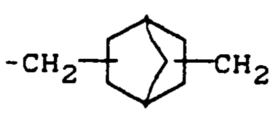 , 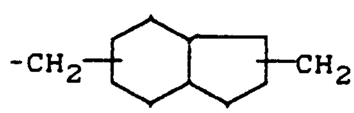 ,

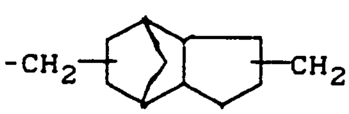 , 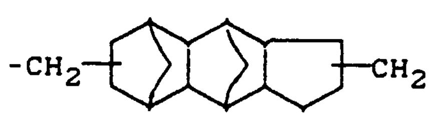 ,

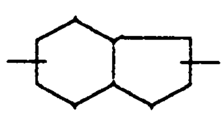 oder 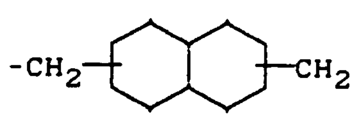

steht,

mit 2 Molen eines Carbonsäureanhydrids der Formeln (II), (III) und/oder (IV)

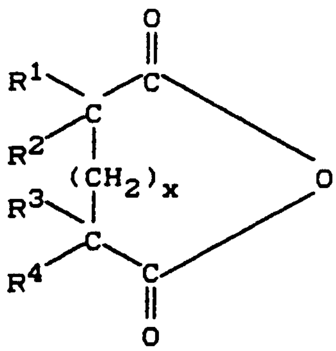

(II)

,

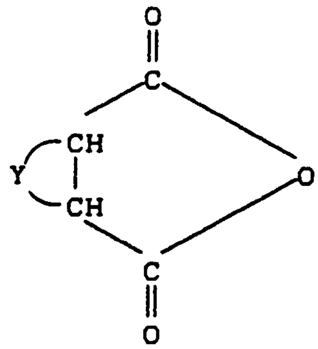

(III)

,

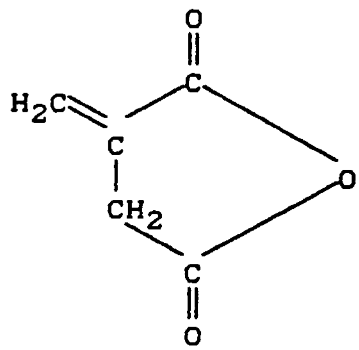

,

(IV)

wobei für

x = 0:

$R^1$, $R^2$, $R^3$ und $R^4$ Wasserstoff bedeuten

oder

$R^1$ und $R^3$ gleich oder verschieden sind und Wasserstoff, $C_1$- bis $C_{35}$-Alkyl oder -Alkenyl bedeuten und $R^2$ und $R^4$ für Wasserstoff stehen

oder

$R^1$ und $R^4$ eine chemische Bindung und $R^2$ und $R^3$ zusammen mit den Kohlenstoffatomen eine o-Phenylengruppe bilden, und für

x = 1:

$R^1$, $R^2$, $R^3$, $R^4$ Wasserstoff bedeuten und

Y für

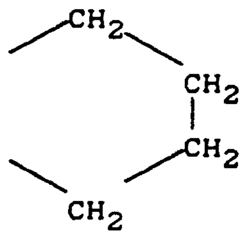 , 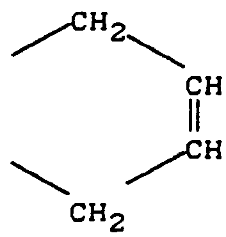 ,

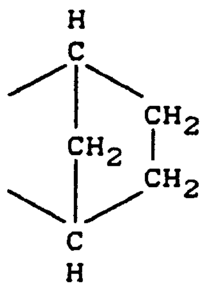 oder 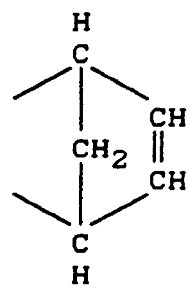

steht,

bei Temperaturen von 100 bis 300 °C unter Inertgasatmosphäre und anschließender Überführung der erhaltenen Verbindungen in die Alkali- oder Ammoniumsalze erhalten werden.

Als Beispiele für geeignete Diole seien genannt:
2,2-Bis-(4-hydroxycyclohexyl)-propan,
1,4-Cyclohexandiol,
1,4-Bis-hydroxymethyl-cyclohexan,
Bis-hydroxymethyl-hexahydro-4,7-methanoindan,
(als "TDC-Diol" handelsüblich, hergestellt durch Hydroformylierung von Dicyclopentadien),
Bis-hydroxymethyl-bicyclo-(4,3,0)-nonan,
Bis-hydroxymethyl-norbornan,
Bis-hydroxymethyl-cyclooctan.

Bei den genannten Diolen handelt es sich meist um Isomerengemische.

Als Beispiele für geeignete Anhydride seien genannt:
Hexahydrophthalsäureanhydrid,
Tetrahydrophthalsäureanhydrid,
5-Norbornen-2,3-dicarbonsäureanhydrid,
Norbornandicarbonsäureanhydrid,
Maleinsäureanhydrid,
Itaconsäureanhydrid.

Die beiden letztgenannten Anhydride werden bevorzugt in Kombination mit gesättigten Anhydriden mit den obengenannten Diolen umgesetzt.

Bevorzugte Emulgatoren sind solche der Formeln

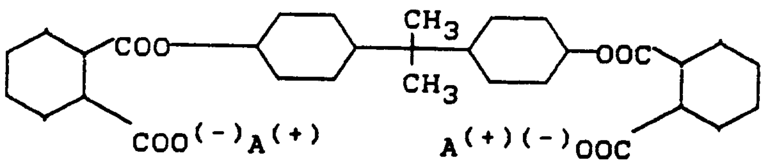

,

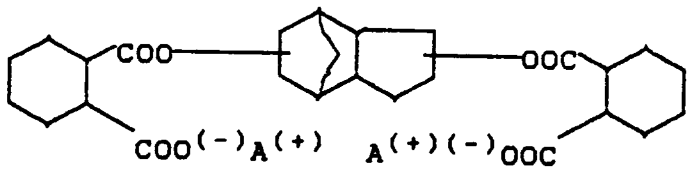

oder

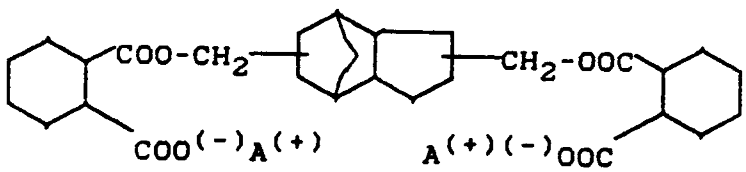

.

Besonders bevorzugt ist der Emulgator der Formel

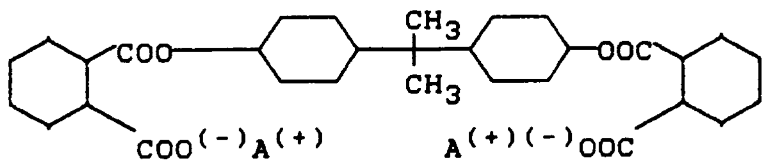

mit A = Alkalimetall, bevorzugt Na und/oder K, sowie Ammonium.

Die erfindungsgemäßen thermoplastischen Formmassen bestehen bevorsugt aus 20 bis 95, besonders bevorzugt 25 bis 85 Gew.-%, eines Vinylchloridpolymerisats (A) und bevorzugt 80 bis 5, besonders bevorzugt 75 bis 15 Gew.-%, einer thermoplastischen Polymeren (B).

B1) Kautschukpolymerisate, B2) Pfropfpolymerisate sowie die B3) Vinylpolymerisate, die als thermoplastische Polymere B) dem Vinylchloridpolymerisat zugesetzt werden, können bevorzugt in folgenden relativen Mengen eingesetzt werden:
20 bis 50 Gew.-Teile B1) zu
80 bis 20 Gew.-Teile B2) zu
0 bis 30 Gew.-Teile B3).

Als A) Vinylchloridpolymerisat kommen in Frage Polyvinylchlorid und Polyvinylchlorid-Copolymerisate, wie Copolymerisate mit Vinylalkylether, Maleinsäureanhydrid, Maleinsäurehalbester, Maleinsäureester sowie Alkylmethacrylat. Die Vinylchloridpolymerisate besitzen im allgemeinen Molekulargewichte von 50.000 bis 2.000.000.

Als Kautschukpolymerisate (B1) können eingesetzt werden Dienkautschuke, wie Polybutadien, Polyisopren sowie Polychloropren, Butadien-Copolymerisate mit Vinylmonomeren, wie Styrol, Acrylnitril, Alkyl-(meth)acrylat sowie Vinylether, Alkylacrylat, wie Ethyl-, Butyl-, Hexylacrylat, Alkylacrylatkautschuke, wie Polyethyl-, Polybutyl-, Polyhexylacrylat, Copolymerisate aus wenigstens 50 Gew.-% Alkylacrylat, wie n-Propyl-, n-Butyl- und Hexylacrylat, mit Vinylmonomeren, wie Acrylnitril, Styrol, Alkylmethacrylat, Vinylacetat, Vinylether, außerdem Olefinkautschuke, beispielsweise Copolymerisate aus Ethylen und Comonomeren, wie Propylen, Dienmonomeren, Vinylacetat, Alkylacrylat, Kohlenmonoxid. Die genannten Kautschuke können unvernetzt oder vernetzt vorliegen. Sie besitzen eine Glastemperatur $T_g$ von $\leqq 0\,°C$.

Pfropfpolymerisate (B2) sind solche, in denen auf einen Kautschuk mit einer Glastemperatur $T_g \leqq 0\,°C$ (Pfropfgrundlage) Styrol, $\alpha$-Methylstyrol, Methylmethacrylat oder ein Gemisch von 95 bis 50 Gew.-% Styrol,

α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind.

Zur Herstellung der Pfropfpolymerisate B2) geeignete Kautschuke sind insbesondere Polybutadien, Butadien/Styrol-Copolymerisate (beide auch copolymerisiert mit bis zu 30 Gew.-%, bezogen auf Kautschukgewicht, eines niederen Alkylesters von Acryl-oder Methacrylsäure wie Methylmethacrylat, Ethylacrylat, Methylacrylat oder Ethylmethacrylat), Polyisopren, Polychloropren, Alkylacrylatkautschuke (aus $C_1$-$C_8$-Alkylacrylaten, insbesondere Ethyl-, Butyl-, Ethylhexylacrylat). Die Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten sowie kleinere Mengen, vorzugsweise bis zu 5 Gew.-%, bezogen auf Kautschukgewicht, vernetzend wirkender, ethylenisch ungesättigter Monomerer. Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien oder Isopren. Als Acrylatkautschuke kommen auch solche infrage, die einen vernetzten Dienkautschuk aus einem oder mehreren konjugierten Dienen und gegebenenfalls einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dien, sowie auch Silikonkautschuke.

Bevorzugte Kautschuke zur Herstellung der Pfropfpolymerisate B2) sind Dien- und Alkylacrylatkautschuke.

Acrylatkautschuke sind besonders vorteilhaft, wenn sie eine Kern-Mantel-Struktur aufweisen, d.h. einen Kern aus einem anderen Polymerisat enthalten, der von einer Hülle aus vernetztem Alkylacrylatkautschuk umgeben ist.

Die Kautschuke liegen im Pfropfpolymerisat B2) in Form wenigstens partiell vernetzter Teilchen eines mittleren Teilchendurchmessers von 0,05 bis 5 µm, insbesondere 0,075 bis 1 µm vor und besitzen Gelgehalte von bevorzugt 99 Gew.-% bis 70 Gew.-%, der Kautschukgehalt im Pfropfpolymerisat B2) beträgt 5 bis 90 Gew.-%, vorzugsweise 20 bis 90 Gew.-%.

Als Vinylpolymerisate (B3) eignen sich bevorzugt Copolymerisate aus Styrol, α-Methylstyrol, p-Methylstyrol, Acrylnitril, Methacrylnitril und/oder Alkylmethacrylaten, wie Methyl- oder Cyclohexylmethacrylat.

Die Emulgatoren, die bei der Herstellung der thermoplastischen Polymeren B) verwendet werden, können hergestellt werden durch Umsetzung eines Diols mit einem geeigneten Carbonsäureanhydrid. Die Umsetzung kann formelmäßig wie folgt dargestellt werden:

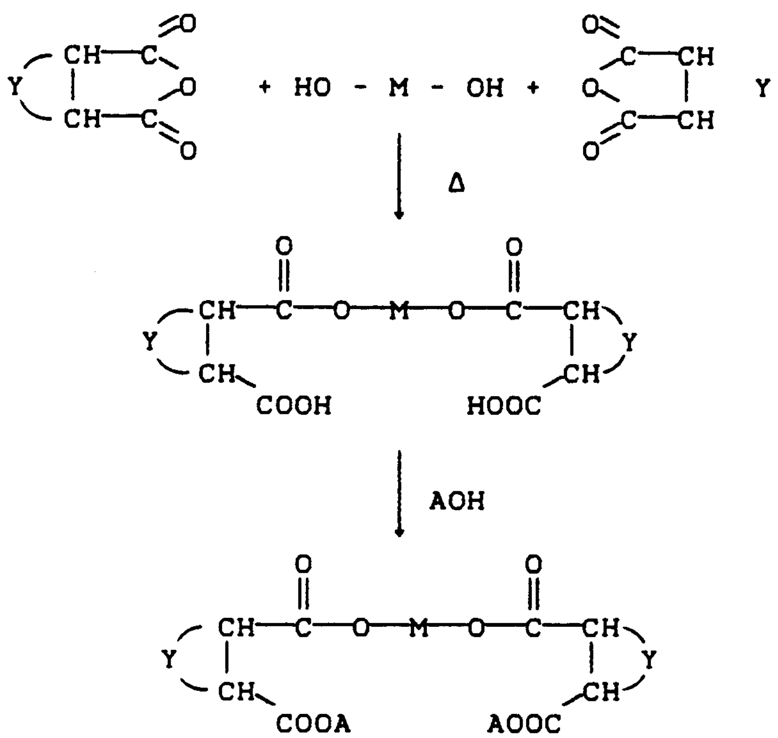

A = Alkalimetall.

Das Diol wird mit den Carbonsäureanhydriden bevorzugt bei Temperaturen von 40 bis 280 °C, gegebenenfalls unter Inertgasatmosphäre (Stickstoff) umgesetzt.

Die erfindungsgemaßen Emulgatoren lassen sich in Form ihrer Salze wie übliche anionische Emulgatoren, z.B. Salze von höheren Fettsäuren, Harzsäuren, aliphatischen oder aromatischen Sulfonsäuren oder Schwefelsäurehalbestern, einsetzen. Insbesondere werden sie in Form wäßriger Alkalilösung mit pH-Wert von ca. 13 bis 7,5 eingesetzt. Die Emulgatoren liegen üblicherweise in der wäßrig-alkalischen Lösung in einer Menge von 2 bis 50, bevorzugt 5 bis 20, Gew.-% vor.

Bezogen auf das zu polymerisierende Monomer bzw. Monomergemisch werden ca- 0,05 bis 5, bevorzugt 1 bis 3, Gew.-% der erfindungsgemäßen Emulgatoren eingesetzt. Dabei ist es besonders vorteilhaft, wenn in der Anfangsphase der Polymerisation zunächst mit den bekannten herkömmlichen anionischen Emulgatoren gearbeitet wird und erst im weiteren Verlauf der Emulsionspolymerisation die erfindungsgemäßen Emulgatoren in das polymerisierende System eingebracht werden. Als Anfangsphase wird ein Monomerumsatz von bis zu 30 Gew.-% betrachtet, insbesondere 5 bis 20 Gew.-%.

Bei mehrstufig (z.B. zweistufig) ablaufenden Emulsionspolymerisationen, wie der Pfropfpolymerisation, kann man prinzipiell

a) die Gesamtpolymerisation mit den erfindungsgemäßen Emulgatoren durchführen,

b) in der ersten Stufe die erfindungsgemäßen Emulgatoren und in der zweiten Stufe herkömmliche Emulgatoren verwenden oder

c) in der ersten Stufe herkömmliche und in der zweiten Stufe die erfindungsgemäßen Emulgatoren verwenden.

Besonders bevorzugt ist die Variante c), die zu Polymerisaten führt mit besonders vorteilhaften Eigenschaften, wie gutem Foggingverhalten.

Die anfallende Emulsion besitzt Feststoffgehalte von bis zu 60 Gew.-%, vorzugsweise bis zu 45 Gew.-% Die Emulsionen lassen sich auf bekannte Art und Weise aufarbeiten, entweder durch Elektrolytkoagulation oder Trocknungsverfahren, wie Sprühtrocknung.

Die erfindungsgemäßen Formmassen können in üblicher Weise durch Cofällung der Latices ihrer Bestandteile oder durch Schmelzkompoundieren der Bestandteile hergestellt werden.

Die erfindungsgemaßen Formmassen besitzen eine verbesserte Wärmeformbeständigkeit und ein wesentlich verringertes Foggingverhalten. Das Fogging der Formmassen ist in den nachfolgenden Beispielen beschrieben.

Die erfindungsgemäßen Formmassen können verwendet werden zur Herstellung von Formkörpern wie Folien und Filmen.

## Beispiele

I. Verwendete Emulgatoren

I.1 Na-Salz der disproportionierten Abietinsäure (Vergleich)

I.2 Na-Salz von $C_{14}$-$C_{18}$-Alkylsulfonsäuren (Vergleich)

I.3 Bis-Na-Salz des Umsetzungsproduktes aus 1 Mol Perhydro-bisphenol A und 2 Mol Hexahydrophthalsäureanhydrid.

### Herstellung der Pfropfpolymerisate (B2)

II. Als Pfropfgrundlage verwendete Kautschuke

II.1 Emulsion eines grobteiligen vernetzten Polybutadiens mit einem mittleren Teilchendurchmes` ser von 400 nm ($d_{50}$), einem Gelgehalt von 93 Gew.-%, hergestellt mit Emulgator I.1, Feststoffgehalt 49 Gew.-%.

II.2 Emulsion eines grobteiligen vernetzten Polybutadiens mit einem mittleren Teilchendurchmesser von 405 nm ($d_{50}$), einem Gelgehalt von 92 Gew.-%, hergestellt mit Emulgator I.3, Feststoffgehalt 52 Gew.-%.

II.3 Emulsion eines feinteiligen vernetzten Polybutadiens mit einem mittleren Teilchendurchmesser von 110 nm ($d_{50}$), einem Gelgehalt von 93 Gew.-%, hergestellt mit Emulgator I.1, Feststoffgehalt 42 Gew,-%.

II.4 Emulsion eines feinteiligen vernetzten Polybutadiens mit einem mittleren Teilchendurchmesser von 115 nm ($d_{50}$), einem Gelgehalt von 91 Gew.-%, hergestellt mit Emulgator I.3, Feststoffgehalt 42 Gew,-%.

III: Pfropfpolymerisate

Die Pfropfpolymerisate III.1 bis III.6 werden mit den in der Tabelle I aufgeführten Material-Mengen hergestellt:

Tabelle 1

| Pfropfpolymerisat | III.1*) Gew.-Tle | III.2 Gew.-Tle | III.3 Gew.-Tle | III.4 Gew.-Tle | III.5 Gew.-Tle | III.6*) Gew.-Tle |
|---|---|---|---|---|---|---|
| Vorlage | | | | | | |
| Emulsion II.2 | | 408 | 408 | 408 | 408 | |
| Emulsion II.4 | | | 504 | | 504 | |
| Emulsion II.3 | 504 | 504 | | 504 | | 504 |
| Emulsion II.1 | 424 | | | | | 424 |
| Wasser | 1180 | 1180 | 1180 | 1180 | 1180 | 1180 |
| Initiator | | | | | | |
| Kaliumperoxiddisulfat | 10 | 10 | 10 | 10 | 10 | 10 |
| Wasser | 400 | 400 | 400 | 400 | 400 | 400 |
| Pfropfmonomere | | | | | | |
| Styrol | 644 | 644 | 644 | 644 | 644 | 644 |
| Acrylnitril | 322 | 322 | 322 | 322 | 322 | 322 |
| Emulgatorzulauf | | | | | | |
| Wasser | 260 | 260 | 260 | 260 | 260 | 260 |
| I.1 | 35 | 35 | 35 | | | |
| I.2 | | | | 35 | 35 | 35 |
| 1n-Natronlauge | 40 | 40 | 40 | 40 | 40 | 40 |

*) Vergleichsversuch

Die Emulsion II wird unter Rühren bei 60 °C mit Wasser und dem Initiatorgemisch gestartet. Anschließend werden bei 60 °C Pfropfmonomere und Emulgator innerhalb von 7 h eingespeist. Danach wird innerhalb von 4 h auspolymerisiert, Nach Stabilisierung der Emulsion mit 1,2 Gew.-%, (bezogen auf Polymerfeststoff) eines phenolischen Antioxidanz werden die Emulsionen durch Koagulation mit einer wäßrigen $MgSO_4$-Lösung zu einem Pulver aufgearbeitet und getrocknet.

Herstellung der Hautschuke (B1)

IV. Eingesetzte Kautschukemulsionen

IV.1 Emulsion eines Copolymerisates aus 70 Gew.-% Butadien und 30 Gew.-% Acrylnitril mit einem mittlerem Teilchendurchmesser ($d_{50}$) von 120 nm und einem Gelgehalt von 88 Gew.-%, Polymerfeststoff der Emulsion 25,5 Gew.-%. Die Emulsion wurde hergestellt mit dem Emulgator I.1.

IV.2 Emulsion eines Copolymerisates der Zusammensetzung wie in IV.1 beschrieben; mittlerer Teilchendurchmesser ($d_{50}$) gleich 110 nm; Gelgehalt 90 Gew.-% Polymerfeststoff in Emulsion 25,7 Gew.-%, Die Emulsion wurde hergestellt mit Emulgator I.2.

IV.3 Emulsion eines Copolymerisates der Zusammensetzung wie in IV.1 beschrieben; mittlerer Teilchendurchmesser ($d_{50}$) gleich 125 nm; Gelgehalt 89 Gew.-% Polymerfeststoff in Emulsion 25,5 Gew.-%. Die Emulsion wurde hergestellt mit Emulgator I.3.

Die Kautschuke wurden aus den Latices zusammen mit den oben beschriebenen Pfropfpolymerisaten isoliert, d.h. durch Elektrolyt-Koagulation von Mischungen der Latices von Pfropfpolymerisat und Kautschuk.

V. Fogging der Pfropfpolymerisate III.1 bis III.6 (Window-Fogging-Test (3 h/100 °C) nach DIN 75 201):

| Pfropfpolymerisat | Glanzwert % |
|---|---|
| III.1 | 77 |
| III.2 | 84 |
| III.3 | 86 |
| III.4 | 88 |
| III.5 | 94 |
| III.6* | 93 |

* Vergleichsversuch

VI. Eigenschaften von PVC-Formmassen

Zur Herstellung der Formmassen wird Polyvinylchlorid (K-Wert 70) mit verschiedenen Mengen verschiedener Polymerisate kombiniert, Als notwendiger Stabilisator- und Gleitmittelzusatz werden in jedem Fall 2 Gew.-% BaCd-Laurat (fest), 0,3 Gew.-% sterisch gehindertes, phenolisches Antioxidanz (fest) und 0,2 Gew.-% Esterwachs zugesetzt. Die Formmassen werden auf einem Mischwalzwerk 10 Min. bei 180 °C homogenisiert und bei 190 °C zu Prüfkörpern verpreßt. Zusammensetzung und Eigenschaften enthalten die Tabellen II und III.

**Tabelle II**

**Eigenschaften der Formmassen**

| Versuch | Zugfestigkeit DIN 53 455 MPa | Dehnung DIN 53 455 % | Weiterreißfestigkeit DIN 53 515 /mm | Shore Härte DIN 53 505 D, 15" | Vicat A DIN 53 359 °C | Kältefestigkeit DIN 53 372 °C |
|---|---|---|---|---|---|---|
| VI.1*) | 22 | 200 | 103 | 57 | 86 | |
| VI.2 | 23 | 213 | 101 | 55 | 86 | |
| VI.3 | 24 | 225 | 108 | 56 | 85 | |
| VI.4 | 26 | 230 | 115 | 55 | 86 | |
| VI.5 | 26 | 239 | 115 | 55 | 87 | |
| VI.6*) | 23 | 210 | 108 | 57 | 87 | |
| VI.7*) | 24 | 260 | 73 | 51 | 77 | -35 |
| VI.8 | 26 | 290 | 73 | 50 | 85 | -40 |
| VI.9 | 28 | 290 | 74 | 51 | 87 | -42 |
| VI.10 | 26 | 285 | 73 | 50 | 86 | -38 |
| VI.11 | 28 | 300 | 88 | 50 | 86 | -42 |

*) Vergleichsversuch

**Tabelle III**

**Zusammensetzung der Formmassen (Gew.-%)**

| Versuch | PVC | Pfropfpolymerisate (B2) III.1 | III.2 | III.3 | III.4 | III.5 | III.6 | Kautschuke (B1) IV.1 | IV.2 | IV.3 | Diisodecyl-phthalat |
|---|---|---|---|---|---|---|---|---|---|---|---|
| VI.1*) | 40 | 40 | | | | | | | | | 20 (Vergleich) |
| VI.2 | 40 | | 40 | | | | | | | | 20 |
| VI.3 | 40 | | | 40 | | | | | | | 20 |
| VI.4 | 40 | | | | 40 | | | | | | 20 |
| VI.5 | 40 | | | | | 40 | | | | | 20 |
| VI.6*) | 40 | | | | | | 40 | | | | 20 |
| VI.7*) | 40 | 27 | | | | | | 18 | | | 15 (Vergleich) |
| VI.8 | 40 | | | 27 | | | | 18 | | | 15 |
| VI.9 | 40 | | | | | 27 | | 18 | | | 15 |
| VI.10 | 40 | | | | | 27 | | | 18 | | 15 |
| VI.11 | 40 | | | | | 27 | | | | 18 | 15 |

## Patentansprüche

**1.** Thermoplastische Formmassen bestehend aus

A) 10 bis 95 Gew.-% eines Vinylchloridpolymerisats und

B) 90 bis 5 Gew.-% wenigstens eines oder mehrerer thermoplastischer Polymerer, die
B1) Kautschukpolymerisate,
B2) Pfropfpolymerisate und
B3) Vinylpolymerisate,

darstellen
wobei B1), B2) und B3) durch eine Emulsionspolymerisation in Gegenwart von Emulgatoren hergestellt wurden, die bei der Umsetzung von 1 Mol eines Diols der Formel (I)

HO - M - OH (I),

worin
M für

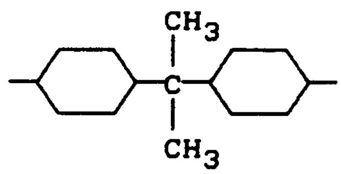 , 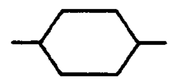 ,

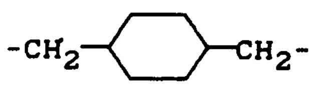 , 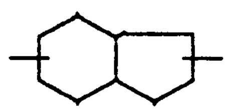 ,

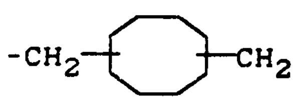 , 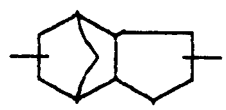 ,

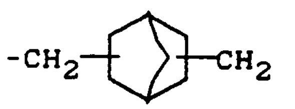 , 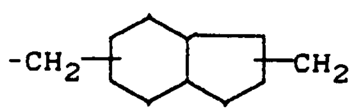 ,

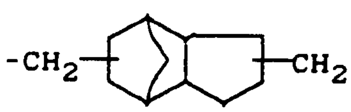 , 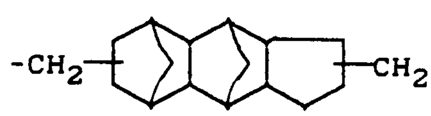 ,

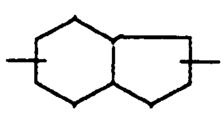 oder 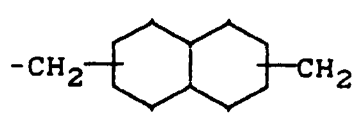

steht,

mit 2 Molen eines Carbonsäureanhydrids der Formeln (II), (III) und/oder (IV)

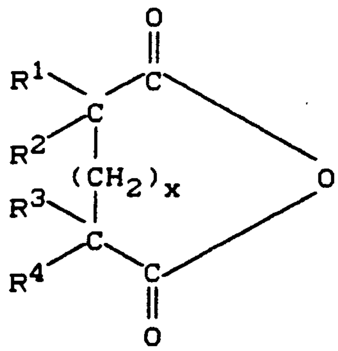 , 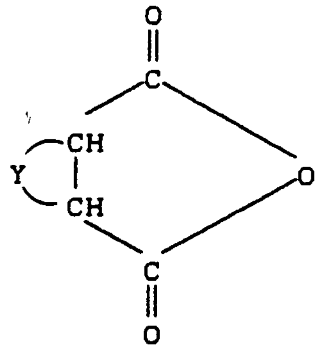 ,

(II) (III)

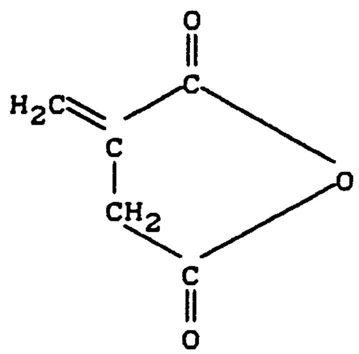 ,

(IV)

wobei für

x = 0:

$R^1$, $R^2$, $R^3$ und $R^4$ Wasserstoff bedeuten

oder

$R^1$ und $R^3$ gleich oder verschieden sind und Wasserstoff, $C_1$- bis $C_{35}$-Alkyl oder -Alkenyl bedeuten und $R^2$ und $R^4$ für Wasserstoff stehen

oder

$R^1$ und $R^4$ eine chemische Bindung und $R^2$ und $R^3$ zusammen mit den Kohlenstoffatomen eine o-Phenylengruppe bilden,

und für

x = 1:

$R^1$, $R^2$, $R^3$, $R^4$ Wasserstoff bedeuten und

Y für

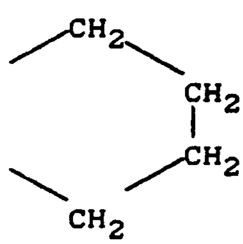 , 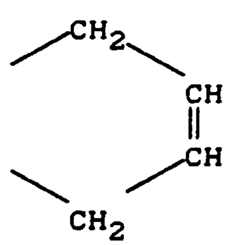 ,

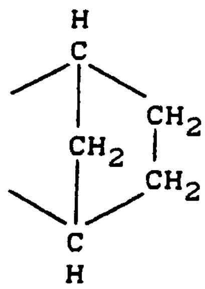

oder

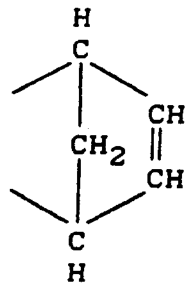

steht,

bei Temperaturen von 100 bis 300 °C unter Inertgasatmosphäre und anschließender Überführung der erhaltenen Verbindungen in die Alkali- oder Ammoniumsalze erhalten werden.

**2.** Thermoplastische Formmassen nach Anspruch 1, worin B1), B2), B3) in Mengen von 20 bis 50 Gew.-Teilen B1 zu 80 bis 20 Gew.-Teilen B2 zu 0 bis 30 Gew.Teilen B3 eingesetzt werden.

**3.** Thermoplastische Formmassen nach Anspruch 1, worin die durch Emulsionspolymerisation hergestellten Polymeren B1), B2) und B3) und Verbindungen der Formel

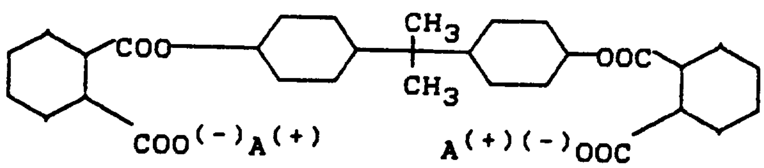

mit A = Alkalimetall oder Ammonium
als Emulgator hergestellt werden.

**4.** Verwendung der thermoplastischen Formmassen nach Anspruch 1 zur Herstellung von Formkörpern, Folien und Filmen.

## Claims

**1.** Thermoplastic moulding compounds consisting of
- A) 10 to 95% by weight of a vinyl chloride polymer and
- B) 90 to 5% by weight of at least one or more thermoplastic polymers in the form of
  - B1) rubber polymers,
  - B2) graft polymers and
  - B3) vinyl polymers,

B1), B2) and B3) having been prepared by emulsion polymerization in the presence of emulsifiers obtained in the reaction of 1 mol of a diol corresponding to formula (I):

HO - M - OH (I)

in which

M represents

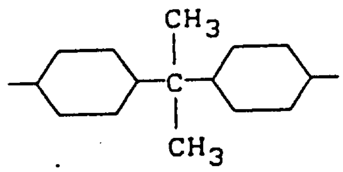 , 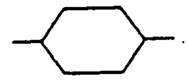 ,

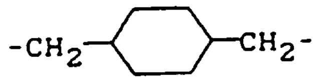 , 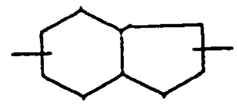 ,

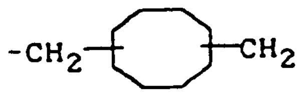 , 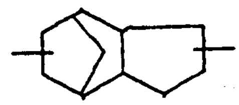 ,

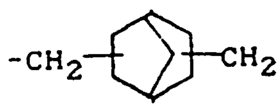 , 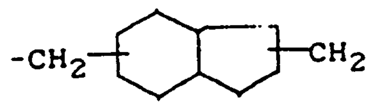 ,

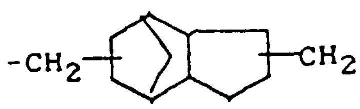 , 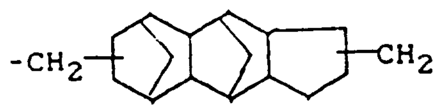 ,

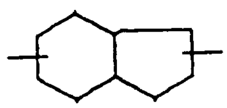 or 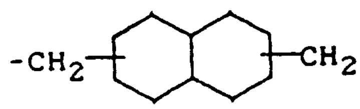

with 2 mols of a carboxylic anhydride corresponding to formulae (II), (III) and/or (IV)

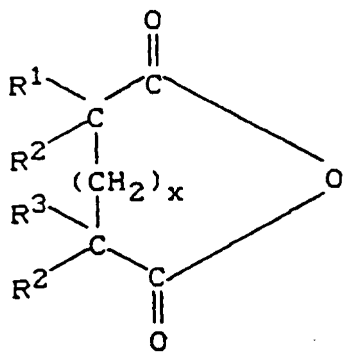 , 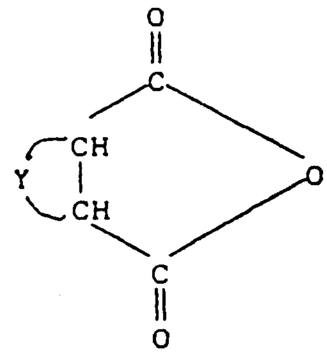 ,

(II) (III)

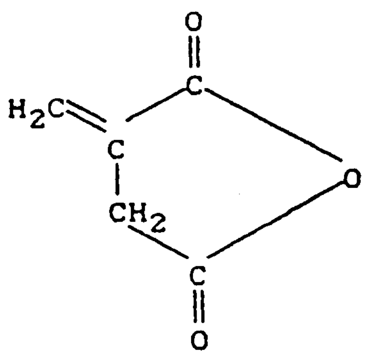 ,

(IV)

in which
where x = 0:
$R^1$, $R^2$, $R^3$ and $R^4$ represent hydrogen
or
$R^1$ and $R^3$ may be the same or different and represent hydrogen, $C_{1-35}$ alkyl or alkenyl and
$R^2$ and $R^4$ represent hydrogen
or
$R^1$ and $R^4$ represent a chemical bond and $R^2$ and $R^3$ together with the carbon atoms form an o-phenylene group
and
where x = 1:
$R^1$, $R^2$ $R^3$ and $R^4$ represent hydrogen and
Y represents

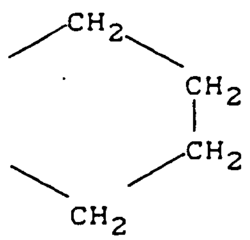
,
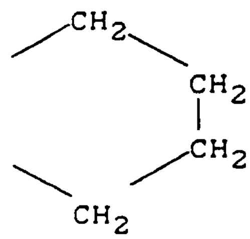
,

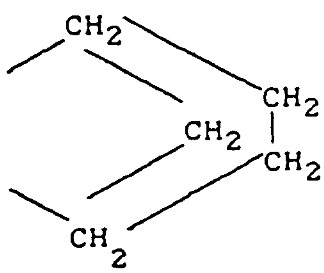
or
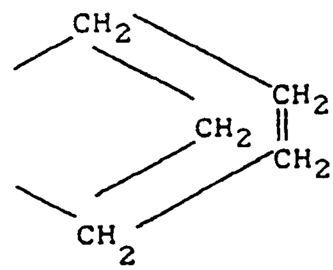

in an inert gas atmosphere at temperatures of 100 to 300 °C and subsequent conversion of the compounds obtained into the alkali metal or ammonium salts.

**2.** Thermoplastic moulding compounds as claimed in claim 1, in which B1), B2) and B3) are used in quantities of 20 to 50 parts by weight of B1) to 80 to 20 parts by weight of B2) to 0 to 30 parts by weight of B3).

**3.** Thermoplastic moulding compounds as claimed in claim 1, in which the polymers B1), B2) and B3) obtained by emulsion polymerization are produced with compounds corresponding to the following formula:

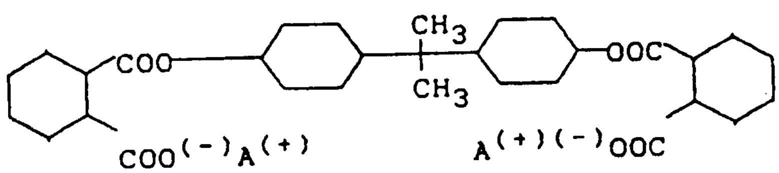

in which
A = alkali metal or ammonium,
as the emulsifier.

**4.** The use of the thermoplastic moulding compounds claimed in claim 1 for the production of mouldings, sheeting and films.

**Revendications**

**1.** Matières à mouler thermoplastiques consistant en
A) 10 à 95% en poids d'un polymère du chlorure de vinyle et
B) 90 à 5 % en poids d'au moins un ou plusieurs polymères thermoplastiques consistant en
B1) des polymères du type caoutchouc,
B2) des polymères greffés et
B3) des polymères vinyliques,
les polymères B1) B2) et B3) ayant été préparés par une polymérisation en émulsion en présence d'agents émulsionnants eux-mêmes obtenus par réaction de 1 mole d'un diol de formule I

HO-M-OH (I)

dans laquelle

M représente

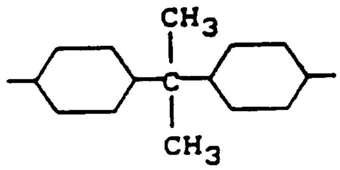 , 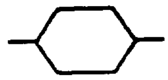 ,

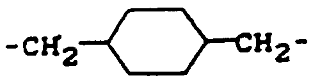 , 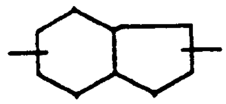 ,

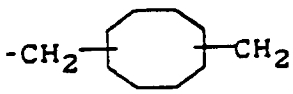 , 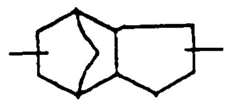 ,

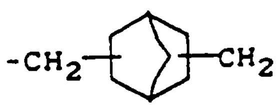 , 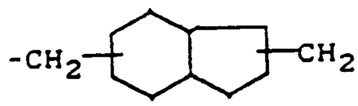 ,

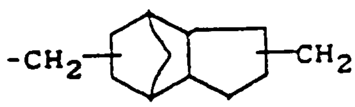 , 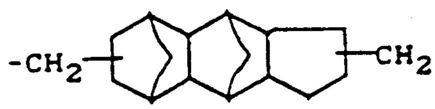 ,

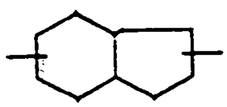 ou 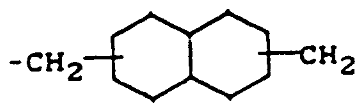

avec 2 moles d'un anhydride d'acide carboxylique de formules II, III et/ou IV

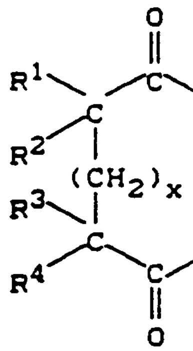 , 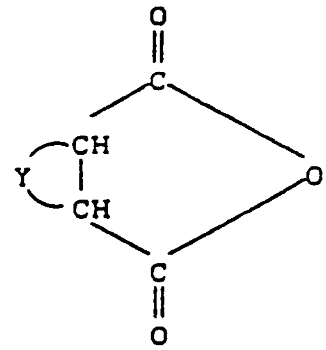 ,

(II) (III)

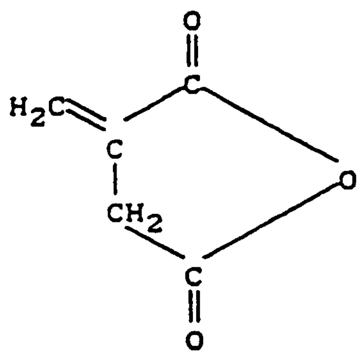 ,

(IV)

dans lesquelles

pour x = 0:

$R^1$, $R^2$, $R^3$ et $R^4$ représentent l'hydrogène,

ou bien

$R^1$ et $R^3$, ayant des significations identiques ou différentes, représentent chacun l'hydrogène, un groupe alkyle ou alcényle en $C_1$-$C_{35}$ et $R^2$ et $R^4$ représentent l'hydrogène, ou bien

$R^1$ et $R^4$ représentent ensemble une liaison chimique et $R^2$ et $R^3$ forment, ensemble et avec les atomes de carbone, un groupe o-phénylène,

et pour x = 1:

$R^1$, $R^2$, $R^3$, $R^4$ représentent l'hydrogène et

Y représente

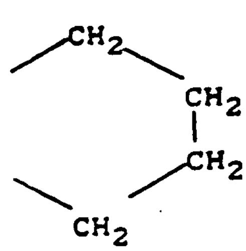 , 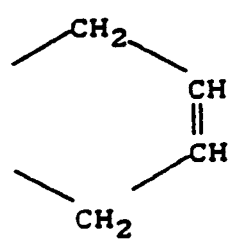 ,

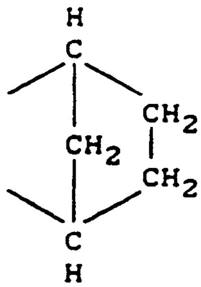 ou 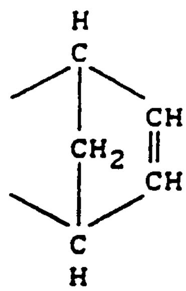

à des températures de 100 à 300 °C en atmosphère de gaz inerte, les composés obtenus étant ensuite convertis en sels alcalins ou d'ammonium.

**2.** Matières à mouler thermoplastiques selon la revendication 1, pour lesquelles les composants B1), B2), B3) ont été mis en oeuvre en quantités de 20 à 50 parties en poids de B1) pour 80 à 20 parties en poids de B2) et pour 0 à 30 parties en poids de B3).

**3.** Matières à mouler thermoplastiques selon la revendication 1, dans lesquelles les polymères préparés par polymérisation en émulsion B1), B2) et B3) ont été préparés avec des agents émulsionnants consistant en composés de formule

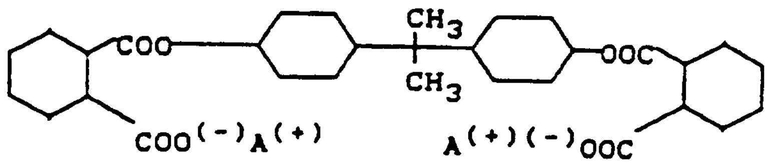

dans laquelle A représente un métal alcalin ou l'ammonium.

**4.** Utilisation des matières à mouler thermoplastiques selon la reven-dication 1 pour la fabrication d'objets moulés de feuilles et de pellicules.